# FASCICULE DE BREVET EUROPEEN

(11) **EP 3 112 227 B1**
(45) Date de publication et mention de la délivrance du brevet: **17.10.2018**
(21) Numéro de dépôt: 16176457.6
(22) Date de dépôt: 27.06.2016
(51) Int. Cl.: B60S 1/40, B60S 1/38

(54) **ADAPTATEUR POUR RELIER UN BALAI D'ESSUIE-GLACE À UN BRAS D'ENTRAÎNEMENT**
ADAPTER ZUM VERBINDEN EINES SCHEIBENWISCHERS MIT EINEM ANTRIEBSARM
ADAPTER FOR CONNECTING A WINDSCREEN WIPER BLADE TO A DRIVING ARM

(30) Priorité: 29.06.2015 FR 1556026
(43) Date de publication de la demande: 04.01.2017
(73) Titulaire: Valeo Systèmes d'Essuyage, 78322 Le Mesnil Saint Denis (FR)
(72) Inventeur: MOULEYRE, Guillaume, 63122 Saint Genès Champanelle (FR); TERRASSE, William, 63270 VIC LE COMTE (FR)
(74) Mandataire: Vincent, Catherine Marie Marguerite

(56) Documents cités:
- EP-A1- 2 733 027
- EP-A2- 2 813 404
- ES-U- 1 071 543
- US-A1- 2015 013 093

## Description

### DOMAINE TECHNIQUE

La présente invention concerne notamment un adaptateur pour relier un balai d'essuie-glace à un bras d'entraînement, en particulier de véhicule automobile.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée *"flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est solidarisée au balai et qui est en général fixée directement sur la lame racleuse ou sur la *flat blade,* alors que l'adaptateur est solidaire du bras. L'adaptateur est une pièce intermédiaire qui permet la liaison et la fixation du connecteur sur le bras d'entraînement. Il est en général configuré pour être engagé dans une tête ou pièce terminale en forme de chape et à section transversale en U du bras d'entraînement.

Le connecteur et l'adaptateur comprennent chacun des moyens d'articulation configurés pour coopérer avec des moyens complémentaires de l'autre organe, pour définir au moins un axe transversal de pivotement du connecteur vis-à-vis de l'adaptateur, qui est un axe de pivotement du balai vis-à-vis du bras. Dans la technique actuelle, l'un des organes, tels que le connecteur, comprend en général un axe physique sensiblement cylindrique qui définit l'axe d'articulation et qui est reçu dans un logement de forme complémentaire de l'autre organe.

L'adaptateur comporte en général un corps configuré pour être engagé dans la pièce terminale du bras de façon à ce que ce corps s'étende au moins en partie entre deux jambes latérales sensiblement parallèles de la pièce terminale. Le corps de l'adaptateur est relié à une extrémité à un carénage ou capotage, appelée couramment tête ou casquette, sur laquelle l'extrémité libre de la pièce terminale vient en butée. Enfin, le corps de l'adaptateur comprend en général un bouton d'actionnement qui est engagé par encliquetage élastique dans un orifice ou une encoche de la pièce terminale, lorsque cette dernière est en butée sur la tête, afin de verrouiller l'adaptateur vis-à-vis de la pièce terminale dans cette position.

Un adaptateur permet d'associer un balai à un type particulier de pièce terminale ou de bras. Dans le cas des pièces terminales précitées à section en U par exemple, il en existe plusieurs variétés. Ces variétés sont très proches en apparence mais diffèrent les unes des autres par des dimensions et en particulier par leurs largeurs ou dimensions latérales, la largeur d'une pièce terminale étant définie par la distance entre les jambes latérales de la pièce terminale et plus exactement par la distance entre les faces externes de ces jambes latérales. Elles varient également par les positions des orifices ou des encoches destinés à coopérer avec les boutons poussoirs de l'adaptateur.

Dans la technique actuelle, il existe autant de variétés d'adaptateur que de variétés de pièces terminales ou d'extrémités de bras d'entrainement, ce qui n'est pas pratique ni économique. Il existe donc un réel besoin d'un adaptateur universel apte à être monté sur au moins deux, voire plus, pièces terminales de bras d'essuie-glace. EP-A-2813404 montre le préambule de la revendication 1.

L'invention propose un perfectionnement à la technique antérieure.

### EXPOSE DE L'INVENTION

L'invention propose à cet effet adaptateur pour relier un balai d'essuie-glace à un bras d'entraînement, l'adaptateur présentant une section en « U » formée par une base et deux flancs délimitant un logement, adaptateur dans lequel :
- au moins un des flancs est formé par au moins deux parois séparées l'une de l'autre par au moins une cavité, et
- au moins une protubérance est reliée à au moins l'une des parois et s'étend au moins en partie à l'intérieur dudit logement.

L'adaptateur selon l'invention peut être utilisé comme adaptateur universel, comme cela sera décrit dans le détail dans ce qui suit, c'est-à-dire un adaptateur pour au moins deux bras d'entraînement différents, tels que par exemple au moins un bras à extrémité ou pièce terminale en U, au moins un bras tige (en général dépourvu de pièce terminale), au moins un bras à verrouillage latéral (de l'anglais « side-lock »), etc...

Un flanc à double parois, autrement appelé à double peaux, permet de limiter la quantité nécessaire de matière lors de la fabrication de la pièce, par exemple lors d'un moulage par injection. Elle permet en outre d'améliorer le rendu de la pièce en diminuant les retassures.

L'adaptateur selon l'invention peut comprendre une ou plusieurs des caractéristiques suivantes, prises isolément ou en combinaison les unes avec les autres :
- la protubérance est reliée aux deux parois délimitant la cavité. Il en va de même pour les deux protubérances,
- au moins l'une des protubérances est configurée pour coopérer avec un moyen complémentaire d'un connecteur pour fixer l'adaptateur au connecteur et définir au moins un moyen de pivotement autour d'un axe entre l'adaptateur et le connecteur. Le moyen de pivotement peut comprendre les deux protubérances,
- au moins l'une des protubérances, et avantageusement les deux, comprend au moins un trou traversant,
- les deux flancs sont formés chacun par au moins deux parois séparées l'une de l'autre par au moins une cavité, et avantageusement par quatre cavités,
- au moins un des flancs comprend une pluralité de cavités séparées les unes des autres par au moins une nervure,
- l'adaptateur peut comprendre une partie avant délimitée d'une partie arrière par un axe de pivotement passant par la protubérance, où la partie avant de l'adaptateur comprend plus de cavités que la partie arrière,
- au moins l'une des protubérances s'étend dans une cavité ménagée entre les parois du flanc à partir de laquelle la protubérance s'étend. Les deux protubérances peuvent être formées ainsi,
- la ou les cavités sont débouchantes de part et d'autre de l'adaptateur, c'est-à-dire de la paroi supérieure et de la paroi inférieure de l'adaptateur. Alternativement, l'adaptateur peut comprendre au moins une cavité débouchante et au moins une cavité borgne, par exemple formées dans un même flanc latéral,
- l'adaptateur comprend au moins deux protubérances chacune issues d'un flanc et qui s'étendent sensiblement l'une vers l'autre dans le logement, et situées de préférence en regard l'une de l'autre. Ces protubérances forment alors un palier de rotation entre l'adaptateur et le connecteur,
- les deux protubérances définissent un même axe de pivotement de l'adaptateur sur un connecteur,
- ladite au moins une protubérance comprend une première partie en saillie d'une des parois, dite paroi interne, dans le logement et une seconde partie qui s'étend entre les parois du flanc,
- lesdites première et seconde parties ont en section des formes identiques, et avantageusement un diamètre externe et/ou interne identique,
- au moins une protubérance est configurée pour être engagée par encliquetage élastique dans un moyen complémentaire d'un connecteur,
- au moins une protubérance comprend une partie tronquée ou chanfreinée pour faciliter son engagement par encliquetage élastique dans ledit moyen complémentaire dudit connecteur,
- lesdites au moins deux protubérances présentent au moins un plan de symétrie, et de préférence deux plans de symétrie sensiblement perpendiculaires,
- ladite au moins une protubérance a une forme générale cylindrique et tubulaire,
- ladite partie tronquée ou chanfreinée définit une rampe de glissement configurée pour coopérer avec une partie du connecteur lors dudit engagement,
- ladite rampe comprend une portion raccordée à ladite face latérale interne ou à faible distance de cette face,
- ladite partie tronquée ou chanfreinée s'étend sur une circonférence autour dudit axe de pivotement, représentant un angle compris entre 30 et 150°, et de préférence entre 90 et 120°,
- l'adaptateur est configuré pour être fixé sélectivement à une pièce terminale d'un premier bras, et à une pièce terminale d'un second bras, différente de celle du premier bras, ledit adaptateur comportant à une extrémité une tête définissant au moins une première surface d'appui d'une partie de pièce terminale et/ou au moins une partie d'un orifice d'engagement d'une partie de pièce terminale, ledit adaptateur comportant également au moins un bouton poussoir de verrouillage configuré pour coopérer avec la pièce terminale dudit premier et/ou second bras,
- l'adaptateur est configuré pour être fixé sélectivement à un premier organe de liaison configuré pour être fixé à un troisième bras, et à un second organe de liaison configuré pour être fixé à un quatrième bras, lesdits premier et second organes de liaison étant différents et étant configurés pour recouvrir au moins en partie ledit adaptateur, et
- les flancs latéraux de l'adaptateur sont configurés pour être déformables autour d'au moins un axe longitudinal de l'adaptateur.

La présente invention concerne également un ensemble comportant un adaptateur tel que décrit ci-dessus et ledit premier organe de liaison qui est configuré pour recouvrir au moins en partie ledit adaptateur, dans lequel ledit premier organe de liaison est fixé directement audit troisième bras, sans pièce intermédiaire, ledit troisième bras étant par exemple un bras tige.

La présente invention concerne encore un ensemble comportant un adaptateur tel que décrit ci-dessus et ledit second organe de liaison qui est configuré pour recouvrir au moins en partie ledit adaptateur, dans lequel ledit second organe de liaison est fixé audit quatrième bras au moyen d'une pièce terminale du bras, et comprend au moins un orifice configuré pour être aligné avec ledit au moins un trou traversant et pour recevoir un axe sensiblement cylindrique de ladite pièce terminale, ledit quatrième bras étant par exemple du type à verrouillage latéral.

Ledit second organe de liaison peut comprendre, sur un premier côté, une première surface latérale configurée pour coopérer par appui et glissement avec ladite pièce terminale du quatrième bras, et sur un second côté opposé, une seconde surface latérale configurée pour coopérer par appui et glissement avec ladite pièce terminale du quatrième bras.

La présente invention vise donc un ensemble comprenant un adaptateur tel que décrit ci-dessus et un connecteur solidaire du balai d'essuyage, dans lequel le connecteur s'étend au moins en partie dans le logement de l'adaptateur.

La présente invention concerne enfin un balai ou un bras d'essuie-glace, caractérisé en ce qu'il comprend ou porte un adaptateur ou un ensemble tel que décrit ci-dessus.

La liaison des protubérances aux deux parois du flanc apporte plusieurs avantages. Les trous intérieurs des protubérances sont plus profonds ou longs, ce qui peut apporter un gain fonctionnel pour le guidage lors de l'articulation précitée. Par ailleurs, les flancs sont rigidifiés par les protubérances, qui ont une meilleure tenue une fois montées. Le montage est ainsi plus ferme lors de l'assemblage. Les protubérances peuvent en outre être directement obtenues par moulage, lors de la fabrication de l'adaptateur.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace, cet essuie-glace comportant un balai d'essuie-glace et un bras d'entraînement du balai, qui sont reliés l'un à l'autre par un système de connexion,
- la figure 2 est une vue schématique en perspective d'un balai d'essuie-glace équipé d'un adaptateur selon l'invention,
- les figures 3 et 4 sont des vues schématiques en perspective d'un connecteur du balai d'essuie-glace de la figure 2,
- les figures 5 et 6 sont des vues schématiques en perspective de l'adaptateur de la figure 2,
- la figure 7 est une vue schématique en perspective de l'adaptateur et du connecteur des figures 3 à 6, et illustre une étape de montage de l'adaptateur sur le connecteur,
- les figures 8 à 10 sont des vues schématiques en perspective d'une variante de réalisation de l'adaptateur, et
- les figures 11 à 18 sont des vues schématiques en perspective du balai d'essuie-glace de la figure 2 et de différents bras d'entraînement reliés au balai grâce à l'adaptateur selon l'invention.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

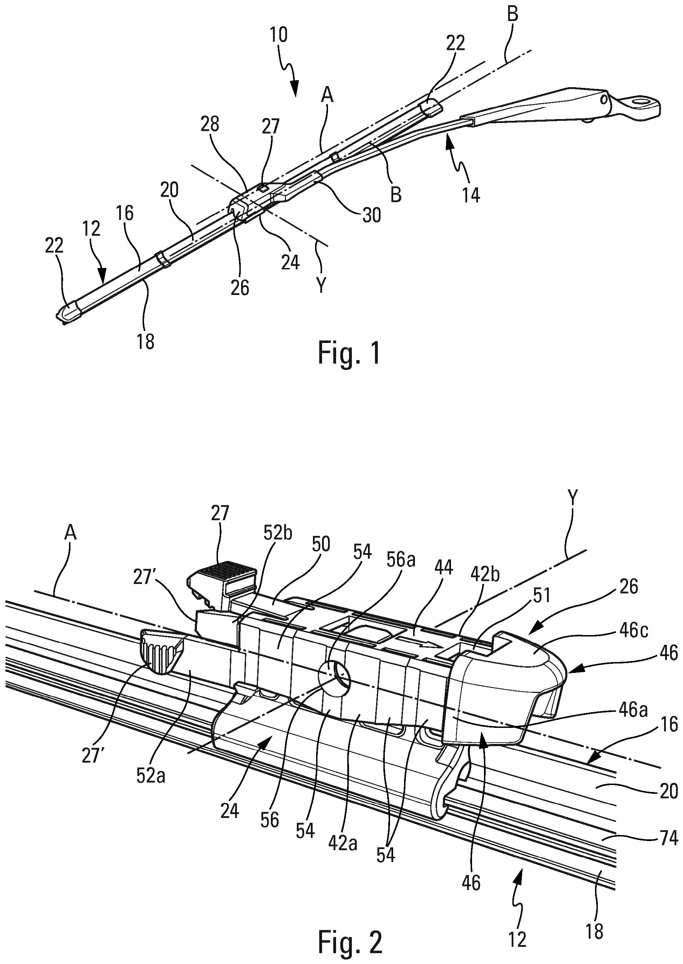

Il est illustré à la figure 1 un essuie-glace 10 comportant notamment un balai 12 et un bras 14 d'entraînement du balai 12.

Le balai 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai 12 comprend sensiblement en son milieu un connecteur 24 intermédiaire. Un adaptateur 26 solidaire du bras 14 est monté sur le connecteur 24 de façon à garder un degré de liberté en pivotement autour d'un axe d'articulation Y qui est un axe transversal sensiblement perpendiculaire à l'axe longitudinal du balai 12. Ce degré de liberté autorise un pivotement du balai 12 vis-à-vis du bras 14 et permet ainsi au balai de suivre la courbure du pare-brise lors de ses déplacements. L'adaptateur 26 peut être désolidarisé du bras 14 par appui sur un bouton d'actionnement, ici un bouton poussoir 27, porté par l'adaptateur.

Le bras 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai 12 au bras 14 et en particulier à une tête ou pièce terminale 28 du bras qui peut être formée d'une seule pièce avec le bras ou rapportée et fixée sur celui-ci.

Dans l'exemple représenté, la pièce terminale 28 du bras forme une chape à section transversale sensiblement en U.

La pièce terminale 28 a une forme allongée dont l'axe d'allongement A est en général sensiblement parallèle à l'axe d'allongement ou longitudinal du balai 12. La pièce terminale 28 comprend une partie 30 de liaison au reste du bras 14, par exemple par sertissage. Cette partie 30 a une forme générale allongée et s'étend le long d'un axe B sensiblement parallèle à l'axe A et à distance de cet axe, comme cela est visible à la figure 1. La partie 30 est reliée à une extrémité arrière ou intérieure de du reste de la pièce terminale 28.

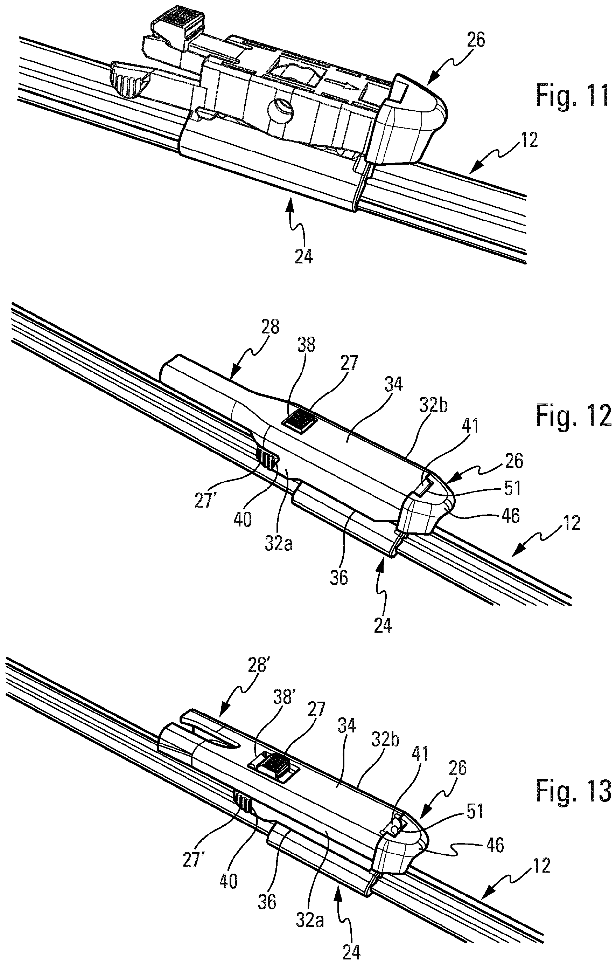

L'adaptateur 26 selon l'invention est du type « universel » et est destiné à être monté indifféremment sur des pièces terminales 28 de différents bras, voire sur des bras non équipés de pièces terminales, comme cela sera décrit plus en détail dans ce qui suit en référence aux figures 12 à 18.

Les figures 2 à 7 montrent un mode de réalisation de l'adaptateur 26 selon l'invention ainsi que du connecteur 24 destiné à coopérer avec cet adaptateur, l'adaptateur et le connecteur formant un ensemble de connexion du balai 12 au bras 14 ou à un bras 14 parmi plusieurs types de bras.

L'adaptateur 24 a une forme générale allongée le long de l'axe A. Il comprend un corps comportant deux flancs latéraux 42a, 42b sensiblement parallèles entre eux et à l'axe longitudinal A, et à distance l'un de l'autre. Ces flancs 42a, 42b sont reliés entre elles à leurs extrémités supérieures par une paroi transversale supérieure 44 sensiblement perpendiculaire aux flancs 42a, 42b. Les flancs 42a, 42b, 44 ont ici une forme allongée en direction longitudinale.

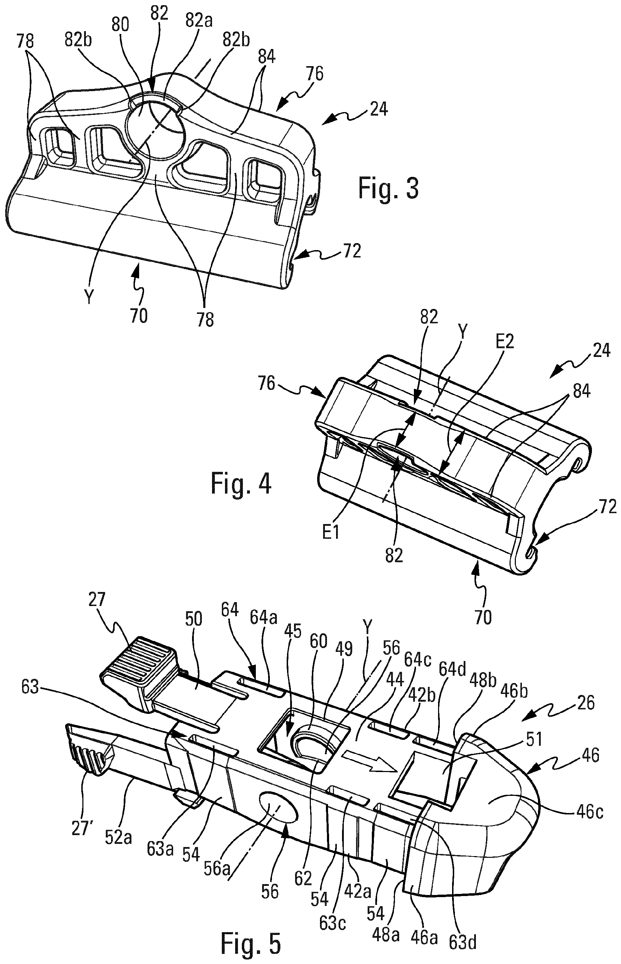

Les flancs 42a, 42b, 44 de l'adaptateur 26 définissent entre eux un espace longitudinal, autrement appelé logement, 45 dans lequel est destinée à être montée une partie du connecteur 24. Les flancs 42a, 42b sont ici du type à double parois et comportent chacun deux parois 42aa, 42ab, 42ba, 42b, respectivement interne et externe, parallèles et à distance transversale l'une de l'autre. Les parois sont reliées ensemble par des nervures 42c transversales, par exemple rectiligne (figures 5-7).

Entre chaque couple de parois 42aa, 42ab et 42ba, 42bb est formé au moins une cavité 63, 64. Avantageusement, il peut être formé une pluralité de cavités 63a, 63b, 63c, 63d, 64a, 64b, 64c, 64d entre les parois et délimitées par au moins une nervure 42c. Dans l'exemple illustré 5, 6 et 7, l'adaptateur comprend trois cavités 63a, 63c, 63d, 64a, 64c, 64d par flanc latéraux 42a, 42b.

Le corps de l'adaptateur 26 est relié à une première de ses extrémités longitudinales à un carénage ou capotage, aussi appelé casquette ou tête 46. Cette tête 46 a une dimension latérale supérieure à celle du corps de l'adaptateur et une hauteur également supérieure à celle du corps. Les flancs latéraux 42a, 42b du corps de l'adaptateur sont ainsi en retrait ou décalés par rapport à des faces latérales externes 46a, 46b de la tête, et sa paroi supérieure 44 est en retrait ou décalée par rapport à une face supérieure externe 46c de la tête.

Les faces latérales 46a, 46b de la tête 46 sont reliées aux flancs latéraux 42a, 42b du corps par des faces arrière latérales 48a, respectivement, qui s'étendent sensiblement perpendiculairement à l'axe longitudinal A. La face supérieure 46c de la tête 46 est reliée à la paroi supérieure 44 du corps par une autre face arrière supérieure 48b qui s'étend également sensiblement perpendiculairement à l'axe longitudinal A.

Les faces arrière 48a, 48b de la tête 46 forment des faces d'appui de l'extrémité extérieure ou avant de la pièce terminale 28. Plus précisément, en position montée de l'adaptateur dans la pièce terminale 28, les bords libres avant des jambes latérales de la pièce terminale sont destinés à venir en appui sur les faces 48a, et le bord libre avant de la paroi transversale de la pièce terminale est destiné à venir en appui sur la face 48b.

La paroi supérieure 44 du corps de l'adaptateur 26 comprend, sensiblement en son milieu, une fenêtre 49. La paroi supérieure 44 comprend à son extrémité longitudinale opposée à la tête 46 des fentes longitudinales parallèles entre elles et à l'axe longitudinal A et espacées les unes des autres, de façon à définir entre elles au moins une portion d'une languette longitudinale 50.

La languette 50 s'étend longitudinalement du côté opposé à la tête 46, dans le prolongement de la paroi supérieure 44. Elle est élastiquement déformable et est reliée à son extrémité libre extérieure ou avant au bouton poussoir supérieur 27 précité, qui est ménagé en saillie sur la languette 50. A l'état libre sans contrainte, chaque languette 50 est telle que le bouton poussoir 27 est situé au-dessus d'un plan passant par la paroi supérieure 44. Les déformations élastiques des languettes ont ici lieu dans un plan longitudinal médian sensiblement vertical, c'est-à-dire sensiblement perpendiculaire à la paroi supérieure 44. L'adaptateur 26 est ainsi équipé d'un bouton poussoir supérieur 27.

Lors du montage de l'adaptateur 26 dans la pièce terminale 28, le bouton poussoir 27 est destiné à s'engager par encliquetage élastique dans l'ouverture 38 pour verrouiller l'adaptateur vis-à-vis de la pièce terminale.

L'adaptateur 26 comprend en outre un orifice supérieur 51 d'engagement d'une patte d'une pièce terminale de bras. Cet orifice 51 est ici formé en partie dans la tête 46, à l'extrémité arrière de celle-ci, et en partie dans la paroi supérieure 44, à l'extrémité avant de celle-ci. L'orifice 51 a une forme générale carrée ou rectangulaire.

Les flancs latéraux 42a, 42b du corps se prolongent vers l'intérieur par des pattes longitudinales 52a, 52b élastiquement déformables. Chaque flanc 42a, 42b est reliée à une patte 52a, 52b, ces pattes 52a, 52b étant sensiblement parallèles et symétriques par rapport à un plan longitudinal médian, sensiblement vertical, c'est-à-dire perpendiculaire à la paroi supérieure 44 de l'adaptateur. Les extrémités libres des pattes 52a, 52b, qui sont situées du côté opposé à la tête 46, portent chacune un bouton poussoir latéral 27' en saillie. Chaque patte 52a, 52b porte ainsi un bouton poussoir 27". Les déformations élastiques des pattes 52a, 52b ont ici lieu dans un plan longitudinal sensiblement horizontal, c'est-à-dire sensiblement parallèle à la paroi supérieure 44. Les pattes 52a, 52b peuvent être rapprochées l'une de l'autre par déformation élastique. Les boutons poussoirs 27" sont conformés pour coopérer avec des encoches de la pièce terminale 28, comme cela sera décrit plus en détail dans ce qui suit.

Les flancs latéraux 42a, 42b du corps de l'adaptateur 26 comprennent sur leurs faces externes des nervures 54 sensiblement parallèles entre elles et perpendiculaires à l'axe longitudinal A et espacées les unes des autres. Chaque nervure 54 définit par son sommet une surface plane destinée à coopérer avec la pièce terminale 28 du bras, comme cela sera également décrit plus en détail dans ce qui suit. Ces nervures 54 correspondent ici à des portions de plus grande épaisseur des flancs latéraux 42a, 42b.

Les flancs latéraux 42a, 42b comprennent chacun un orifice 56 traversant. Les orifices 56 des flancs 42a, 42b sont sensiblement coaxiaux et définissent ici l'axe Y de pivotement de l'adaptateur 24 sur le connecteur 24, et donc du balai vis-à-vis du bras. Les orifices 56 sont ici à section circulaire et comprennent chacun une surface interne 56a sensiblement cylindrique. Les orifices 56 débouchent à leurs extrémités latérales externes sur les faces externes des flancs 42a, 42b, respectivement, et à leurs extrémités latérales internes dans le logement 45.

Des faces latérales internes 85, 87 en regard des flancs latéraux 42a, 42b comprennent des protubérances 60. Chaque flanc latéral 42a, 42b comprend une protubérance 60, les protubérances étant ici en regard l'une de l'autre et s'étendant sensiblement l'une vers l'autre. Elles s'étendent dans le logement 45. Les protubérances 60 sont symétriques par rapport à un plan longitudinal médian de l'adaptateur, perpendiculaire à la paroi supérieure 44. Chaque protubérance 60 présente également un plan de symétrie passant par l'axe de pivotement Y et perpendiculaire à l'axe longitudinal A.

Chaque protubérance 60 est trouée et comprend un trou traversant. Ce trou est ici formé par un des orifices 56 précités. Chaque protubérance 60 est ainsi située sur la face interne 85 ou 87 du flanc latéral 42a ou 42b de sorte à être traversée par l'orifice 56 de ce flanc.

Chaque protubérance 60 a une forme générale cylindrique et ici tubulaire du fait de l'orifice 56 qui la traverse. L'axe de chaque orifice 56, qui est confondu avec l'axe de pivotement Y, est également confondu avec l'axe de la protubérance 60 correspondante, si bien que l'orifice 56 est centré vis-à-vis de la protubérance. Chaque protubérance 60 forme ainsi un bourrelet annulaire de matière autour de l'orifice 56, ayant sensiblement une épaisseur radiale par rapport à l'axe de pivotement Y sensiblement constante. Chaque protubérance 60 a une dimension axiale le long de l'axe de pivotement Y qui représente environ 10 à 20% de la dimension axiale ou largeur du logement le long de l'axe de pivotement Y. Chaque protubérance 60 a un diamètre externe qui représente environ 60 à 80% de la hauteur du flanc latéral 42a, 42b correspondant, mesurée dans une direction sensiblement verticale perpendiculaire à la paroi supérieure 44.

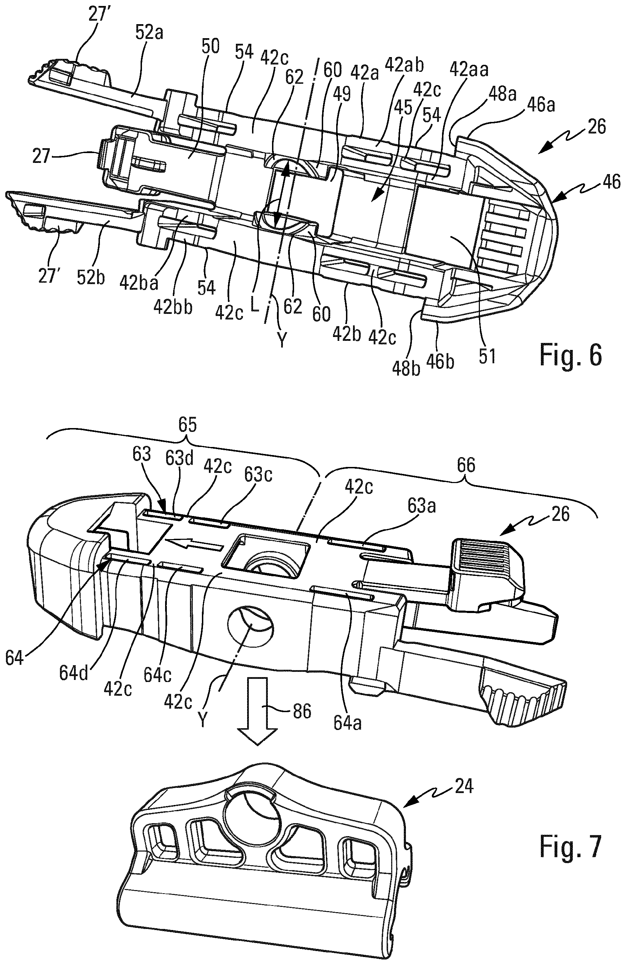

Chaque protubérance 60 est reliée aux deux parois 42aa, 42ab, 42ba, 42bb du flanc 42a, 42b correspondant. Comme on le voit en figure 6, chaque protubérance 60 est directement reliée à la paroi interne 42aa, 42ba du flanc 42a, 42b et s'étend depuis la face interne de cette paroi interne. Chaque protubérance 60 est avantageusement reliée à la paroi externe 42ab, 42bb du flanc 42a, 42b par une nervure 42c inter-parois.

Comme cela est visible aux figures 5 et 6, chaque protubérance 60 comprend une partie, ici inférieure, tronquée ou chanfreinée. Chaque partie tronquée ou chanfreinée définit une rampe 62 qui s'étend dans un plan incliné par rapport aux flancs latéraux 42a, 42b. Chaque rampe 62 définit une surface de glissement destinée à coopérer avec le connecteur 24. Les rampes 62 des protubérances 60 sont inclinées de sorte qu'elles s'éloignent l'une de l'autre du haut vers le bas. Leurs extrémité inférieures, situées du côté opposé à la paroi supérieure 44, sont espacées l'une de l'autre d'une distance L le long de l'axe de pivotement Y (figure 6). L'extrémité inférieure de chaque rampe 60 s'étend à faible distance, le long de l'axe de pivotement Y, de la face interne 85, 87 du flanc latéral 42a, 42b correspondant et peut être directement reliée à cette face interne. Dans ce dernier cas, la distance L est sensiblement égale à la distance entre les faces internes 85 et 87 des flancs 42a, 42b ou à la largeur du logement 45. Chaque rampe 62 s'étend sur une circonférence autour de l'axe de pivotement Y, représentant un angle compris entre 30 et 150° et de préférence entre 90 et 120°.

L'adaptateur 26 décrit ci-dessus est avantageusement unitaire, c'est-à-dire constitué par une même matière synthétique. Il peut ainsi être fabriqué au cours d'une unique opération de moulage, notamment par injection.

L'adaptateur 26 est fixé au connecteur 24 grâce aux protubérances 60 qui forment des moyens de fixation de l'adaptateur au connecteur et qui peuvent en outre former des moyens de pivotement ou de rotation de l'adaptateur vis-à-vis du connecteur. Les moyens de fixation sont du type à encliquetage élastique, les protubérances 60 de l'adaptateur 26 étant destinées à coopérer par encliquetage élastique avec des moyens complémentaires du connecteur 24.

Le connecteur 24, mieux visible aux figures 3 et 4, est agencé pour être rendu solidaire, par exemple par sertissage, du balai 12. Le connecteur 24 assure une liaison mécanique dite complète avec le balai 12, en ce sens qu'il n'existe pas de degré de liberté. Le connecteur 24 peut également assurer une fonction de transport et de distribution d'un liquide de lavage du pare-brise du véhicule.

Le connecteur 24 comprend une embase 70 qui s'étend longitudinalement et transversalement. Cette embase 70 comprend une zone de solidarisation 72 sur le balai 12, et plus particulièrement sur au moins une vertèbre 74 de ce balai. Cette zone de solidarisation 72 prend par exemple la forme d'une saignée ménagée dans l'embase 70, cette saignée étant bordée par deux crochets aptes à venir en prise sur le balai.

Dans l'exemple représenté, le balai 12 comprend deux vertèbres 74 parallèles et coplanaires qui sont espacées l'une de l'autre pour définir un espace de logement de la lame d'essuyage 18 ou du corps 16 du balai. Chaque vertèbre comprend un bord longitudinal, opposé à la lame 18, qui est reçu dans la saignée du connecteur 24.

L'embase 70 est surmontée d'un flanc 76, par exemple, issu de matière avec l'embase. Ce flanc 76 présente une dimension transversale inférieure à celle de l'embase et une dimension longitudinale sensiblement égale à celle de l'embase. Le flanc 76 est par exemple centré sur l'embase 70, selon l'axe de pivotement Y. Le flanc 4 peut présenter une pluralité de nervures 78 qui assurent un renforcement mécanique du flanc.

Le connecteur 24 et l'adaptateur 26 sont reliés mécaniquement par une liaison pivot. En ce qui concerne le connecteur 24, cette liaison pivot est mise en oeuvre par une cavité 80 réalisée dans le flanc 76 du connecteur. Cette cavité 80 s'étend selon l'axe Y et présente une section circulaire. Elle traverse le flanc 76. En d'autres termes, la cavité 80 a un axe central centré sur l'axe de pivotement Y.

Le connecteur 24 décrit ci-dessus est avantageusement unitaire, c'est-à-dire constitué par une même matière synthétique. Ce connecteur peut ainsi être fabriqué au cours d'une unique opération de moulage, notamment par injection.

L'adaptateur 26 est monté sur le connecteur 24 par encliquetage élastique de ses protubérances 60 dans la cavité 80 du connecteur. Les rampes 62 des protubérances 60 de l'adaptateur 26 coopèrent avec le connecteur pour faciliter ce montage. De son côté, le connecteur comprend également des moyens facilitant une insertion des protubérances 60 de l'adaptateur 26 dans sa cavité 10.

Ces moyens sont ici aménagés sur le flanc 76 du connecteur 24. Il s'agit ici de rainures 82 ménagées dans les faces latérales délimitant le flanc 76, et au droit de laquelle la cavité 80 se termine. On comprend ici que chaque rainure 82 et la cavité 80 sont en intersection l'une avec l'autre, la rainure 82 s'étendant ainsi depuis une arête 84 du flanc 76 jusqu'au trou formant la cavité 80. Au droit de chaque rainure 82, le flanc 76 présente une épaisseur E1 inférieure à une épaisseur E2 d'une portion du flanc 76 bordant ladite rainure 82. Ces épaisseurs E1, E2 sont mesurées selon une direction parallèle à l'axe de pivotement Y. Ainsi formée, cette rainure 82 est délimitée par un fond 82a et par deux tranches 82b qui relient le fond 82a à la face latérale correspondant du flanc.

Les fonds 82a des rainures 82 sont parallèles ou inclinés l'un par rapport à l'autre. Dans ce dernier cas, ils sont inclinés de sorte que leurs extrémités supérieures, situées du côté opposé à la cavité 80, soient plus proches que ne le sont leurs extrémités inférieures.

Comme le montre la figure 7, l'assemblage de l'adaptateur 26 sur le connecteur 24 est réalisé uniquement par une translation verticale illustrée par la flèche référencée 86 selon un axe perpendiculaire à la paroi supérieure 44 de l'adaptateur. Lors de cette translation, les protubérances 60 de l'adaptateur 26 s'engagent dans les rainures 82 du connecteur et coopèrent avec leurs tranches 82b pour centrer l'adaptateur sur le connecteur. Les rampes 62 ont des surfaces de guidage qui coopèrent par glissement avec les fonds 82a des rainures. Pour cela, la distance L précitée est de préférence supérieure à l'épaisseur E1. Par ailleurs, la distance inter-protubérances 60, mesurée le long de l'axe de pivotement Y, est inférieure à la largeur de la cavité 80 ainsi que l'épaisseur E2.

Lors de l'insertion des protubérances 60 dans les rainures 82, les rampes 62 prennent appui sur les fonds des rainures et la translation vers le bas de l'adaptateur est poursuivie de sorte que les flancs latéraux 42a, 42b de l'adaptateur soient contraints de se déformer en s'écartant l'un de l'autre du fait du glissement des rampes sur les fonds des rainures. Cette opération est poursuivie jusqu'à ce que les protubérances 60 s'engagent par encliquetage ou retour élastique dans la cavité 80 du connecteur. L'adaptateur est alors fixé au connecteur et peut en outre pivoter sur lui autour de l'axe de pivotement Y, par coopération de ses protubérances avec la surface cylindrique interne 80a de la cavité. La cavité 80 a un diamètre interne sensiblement égal ou légèrement supérieur à celui des protubérances 60 pour autoriser la rotation entre l'adaptateur et le connecteur. On obtient alors le montage représenté en figure 2.

Comme évoqué précédemment, l'adaptateur 26 est du type universel car il est apte à être fixé à plusieurs types de bras, que ce soit des bras à pièce terminale ou sans pièce terminale.

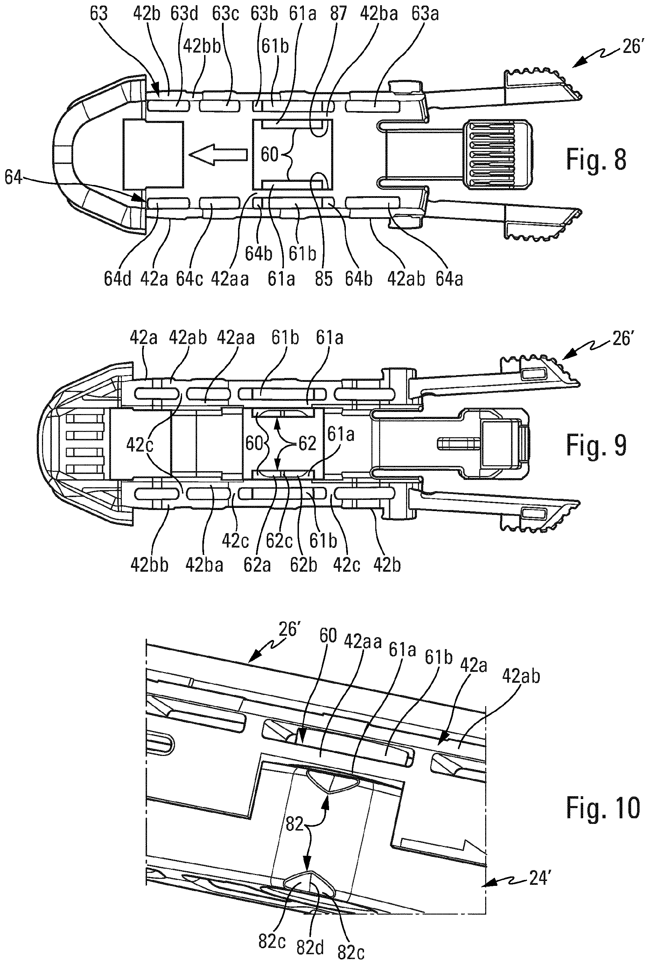

On se réfère maintenant aux figures 8 à 10 qui représentent une variante de réalisation de l'adaptateur 26', qui comprend toutes les caractéristiques précitées de l'adaptateur 26, dans la mesure où elles ne sont pas en contradiction avec ce qui suit.

Chaque protubérance 60 est reliée aux deux parois 42aa, 42ab, 42ba, 42bb du flanc 42a, 42b correspondant et comprend une première partie 61a qui est reliée à la paroi interne 42aa, 42ba du flanc 42a, 42b et qui s'étend depuis la face interne 85, 87 de ce flanc, et une seconde partie 61b qui s'étend entre les parois 42aa, 42ab ou 42ba, 42bb constitutives d'un même flanc. Comme on le voit dans les dessins, au contraire du précédent mode de réalisation, les parties 61a, 61b ont ici en section une forme similaire voire identique, qui est une forme annulaire, le diamètre interne et/ou externe pouvant être identique.

La seconde partie 61b de la protubérance 60 s'étend entre les parois duquel est issue la première partie 61a de la protubérance formant palier. Comparé au premier mode de réalisation de l'adaptateur, la seconde partie 61b s'étend ainsi dans une quatrième cavité 63b, 64b. L'adaptateur comprend donc huit cavités réparties quatre par quatre dans chaque flanc 42a, 42b de l'adaptateur.

Dans l'exemple représenté, la rampe 62 de chaque protubérance 60 a en section une forme sensiblement en V inversé. Elle comprend deux surfaces de glissement 62a, 62b adjacentes et inclinées l'une par rapport à l'autre. Les deux surfaces 62a, 62b sont ici inclinées l'une par rapport à l'autre d'un angle compris entre 190 et 330°, et de préférence entre 200 et 240°.

Les surfaces de glissement 62a, 62b ont chacune une forme générale en aile ou en D. Les surfaces sont raccordées ensemble par un cordon 62c sensiblement rectiligne. Ce cordon 62c a ici en section une forme incurvée convexe.

Comme on peut l'apprécier notamment à la figure 8, la rampe 62 est formée par un chanfrein située sur une arête annulaire externe de la protubérance 60, plus particulièrement à l'extrémité libre de la première partie 61a de la protubérance 60.

Les rampes 62 et leurs surfaces 62a, 62b sont symétriques par rapport à un premier plan longitudinal médian perpendiculaire à la paroi supérieure de l'adaptateur, ainsi que par rapport à un second plan perpendiculaire au premier plan et à la paroi supérieure de l'adaptateur, et passant par l'axe de pivotement Y.

Chaque encoche 82 du connecteur 24' destiné à coopérer avec l'adaptateur 26' a en section une forme sensiblement en V droit. Elle comprend deux surfaces de glissement 82c, 82c adjacentes et inclinées l'une par rapport à l'autre, ici d'un angle compris entre 30 et 170°, et de préférence entre 120 et 160°

Les surfaces 82c, 82c sont raccordées ensemble par un cordon rectiligne 82d, qui a ici en section une forme incurvée concave. Les surfaces ont chacune une forme générale en aile delta dans l'exemple représenté.

Les encoches 82 du connecteur 24' sont symétriques par rapport à un premier plan médian perpendiculaire à l'axe de pivotement Y. Un second plan perpendiculaire audit premier plan passe sensiblement par l'axe de pivotement Y et au milieu des encoches.

L'assemblage de l'adaptateur 26' sur le connecteur 24' est réalisé uniquement par une translation verticale selon un axe perpendiculaire à la paroi supérieure de l'adaptateur. Lors de cette translation, les protubérances 60 de l'adaptateur 26' s'engagent dans les encoches 82 du connecteur et leurs surfaces 62a, 62b coopèrent avec les surfaces 82a, 82b pour centrer et guider l'adaptateur sur le connecteur. Lors de l'insertion des protubérances 60 dans les encoches 82, les rampes 62 prennent appui sur les surfaces des encoches et la translation vers le bas de l'adaptateur est poursuivie de sorte que les flancs latéraux 42a, 42b de l'adaptateur soient contraints de se déformer en s'écartant l'une de l'autre du fait du glissement des rampes sur les surfaces des encoches. Cette opération est poursuivie jusqu'à ce que les protubérances 60 s'engagent par encliquetage ou retour élastique dans l'orifice du connecteur. L'adaptateur est alors fixé au connecteur et peut en outre pivoter sur lui autour de l'axe de pivotement Y, par coopération de ses protubérances avec les surfaces cylindriques internes de l'orifice du connecteur.

Les figures 11 à 18 représentent plusieurs types de bras pouvant être équipés de l'adaptateur 26, 26' selon l'invention.

On se réfère d'abord aux figures 12 et 13 qui représentent respectivement deux pièces terminales 28, 28' de bras d'entraînement différents.

Chaque pièce terminale 28, 28' comprend deux jambes latérales 32a, 32b dont les bords longitudinaux supérieurs sont reliés entre eux par une paroi transversale supérieure 34. Les jambes 32a, 32b et la paroi 34 délimitent entre elles un espace de logement de l'adaptateur 26. Les jambes 32a, 32b peuvent comprendre au niveau de leurs bords longitudinaux inférieurs des moyens 36, tels que des crochets, de retenue de l'adaptateur 26 dans l'espace précité.

La paroi supérieure 34 comprend une ouverture 38, 38' traversante destinée à recevoir le bouton poussoir supérieur 27. En position de montage, le bouton poussoir 27 est logé dans cette ouverture 38 et peut traverser cette dernière de façon à être en saillie sur la face supérieure de la paroi 34. Le montage du bouton poussoir 27 dans l'ouverture 38 se fait par simple engagement ou emboîtement, de préférence par encliquetage élastique.

Les parois latérales 32a, 32b peuvent comprendre chacune une encoche 40 de forme complémentaire d'un bouton poussoir latéral 27'. En position de montage, les boutons poussoirs latéraux 27' sont logés dans ces encoches 40 et peuvent les traverser de façon à être en saillie sur les faces externes des parois 32a, 32b. Le montage des boutons poussoirs 27" dans les encoches 40 se fait par simple engagement ou emboîtement, de préférence par encliquetage élastique.

Les pièces terminales 28, 28' sont différentes. Elles ont globalement la même forme mais diffèrent les unes des autres notamment par des dimensions et par la forme et la taille de leurs ouvertures 38, 38' ou encoches 40.

Les parois supérieures 34 des pièces terminales 28, 28' se prolongent vers l'extérieur pour former chacune une patte 41 à section longitudinale sensiblement en S, qui est configurée pour être engagée dans l'orifice 51 de l'adaptateur 26.

Les pièces terminales 28, 28' ont sensiblement la même largeur externe. Par ailleurs, les nervures 54 formées sur les faces externes des flancs latéraux du corps de l'adaptateur 26 peuvent être espacées d'une distance transversale sensiblement égale à la largeur interne de la pièce transversale 28, 28', de façon à ce que la pièce terminale soit calée en direction transversale par coopération de ses jambes avec les flancs latéraux du corps de l'adaptateur.

On va maintenant décrire le montage de l'adaptateur 26 selon l'invention sur chacune des pièces terminales 28, 28'.

L'adaptateur 26 est engagé dans la pièce terminale 28, 28' en inclinant tout d'abord l'axe de l'adaptateur vis-à-vis de celui A de la pièce terminale 28 puis en engageant la patte 41 de la pièce terminale dans l'orifice 51 de l'adaptateur. Lors de cet engagement, les jambes de la pièce terminale commencent par glisser sur les nervures 54 de l'adaptateur. De plus, le bord d'extrémité avant de la paroi supérieure de la pièce terminale vient en appui sur la face 48b de la tête 46 de l'adaptateur. L'extrémité arrière de l'adaptateur est ensuite rapprochée de la pièce terminale jusqu'à ce que les boutons poussoirs latéraux 27' s'engagent par encliquetage élastique dans les encoches 40 de la pièce terminale 28, 28'. Les bords d'extrémité avant des jambes latérales 32a, 32b de la pièce terminale viennent en appui sur les faces 48a de la tête 46 de l'adaptateur. Les axes de l'adaptateur et de la pièce terminale 28 sont alors sensiblement parallèles.

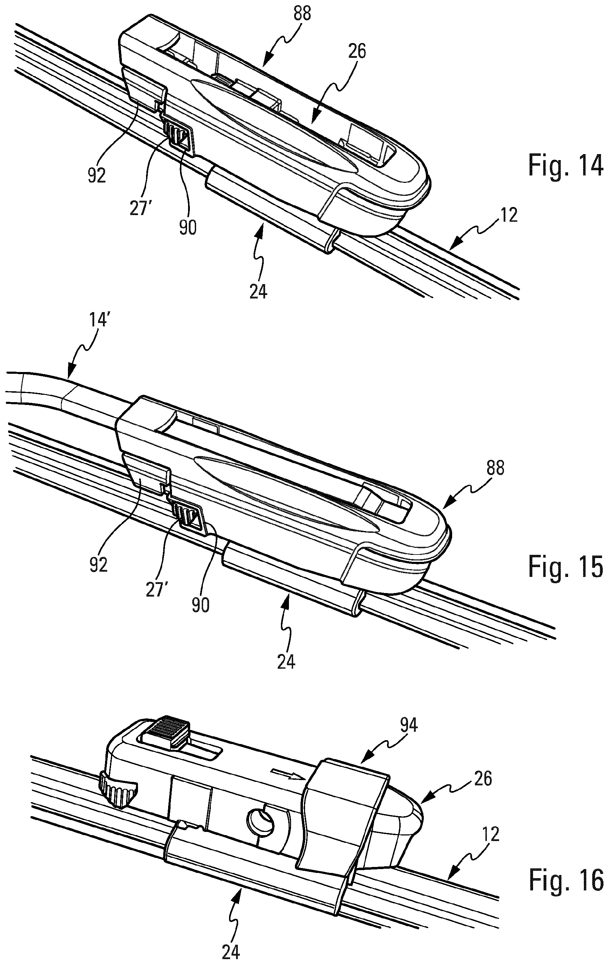

On se réfère maintenant aux figures 14 et 15, dans lesquelles l'adaptateur 26 est relié à un bras 14 du type bras tige, c'est-à-dire dépourvu de pièce terminale supplémentaire, par l'intermédiaire d'un premier organe de liaison 88.

Cet organe de liaison 88 est monté sur l'adaptateur 26 et le recouvre intégralement dans l'exemple représenté. Il a une forme longitudinale et comprend un logement interne dans lequel est monté et retenu l'adaptateur. Il comprend à son extrémité arrière des encoches latérales destinées à recevoir par encliquetage élastiques les boutons poussoirs 27', respectivement.

Le bras tige 14' comprend une extrémité engagée dans l'organe de liaison 88, sur sensiblement toute sa longueur, depuis l'extrémité longitudinale arrière de l'organe 88. Le bras tige 14' est solidarisé à l'organe 88 par des moyens appropriés et peut être démonté de l'organe par l'actionnement de boutons poussoirs 92 portés par l'organe et destinés à coopérer avec l'extrémité du bras tige 14'.

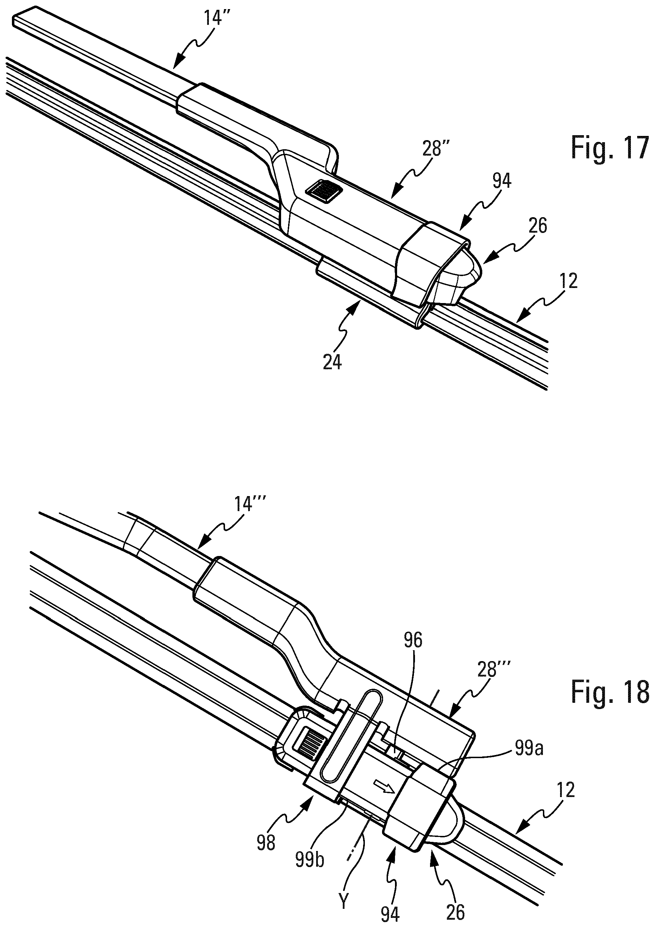

La figure 16 montre un second organe de liaison 94 qui peut être utilisé pour relier l'adaptateur 26 à deux autres types de bras, représentés respectivement aux figures 17 et 18.

L'organe de liaison 94 est similaire à l'adaptateur et est destiné à être monté sur l'adaptateur pour le recouvrir au moins en partie. Il est notamment utilisé pour pouvoir équiper un bras 14" doté d'une pièce terminale 28" large avec l'adaptateur 26. La pièce terminale 28" du bras 14" de la figure 17 diffère de celles des figures 12 et 13 notamment en ce qu'elle a une largeur plus importante, notamment 22mm comparé aux 19mm de la pièce terminale illustrée aux figures 12 et 13. L'organe de liaison 94 est configuré pour rattraper les jeux entre l'adaptateur 26 et la pièce terminale 28", et pour épouser les formes de ces derniers en étant pris en sandwich entre eux. La pièce terminale 28" est similaire à celles des figures 12 et 13.

Le bras 14'" de la figure 18 est un bras à verrouillage latéral (de l'anglais side-lock) dont la pièce terminale 28'" comprend d'une part une tige cylindrique 96 s'étendant transversalement sur un côté de la pièce terminale, ainsi qu'un verrou 98 en forme de L qui s'étend transversalement du même côté que la tige 96, et parallèlement et à distance de cette dernière.

La tige 96 est destinée à traverser des orifices latéraux de l'organe 94, qui sont alignés sur l'axe de pivotement Y et donc alignés avec les orifices 56 de l'adaptateur 26 et la cavité 80 du connecteur. La tige 96 est engagée dans ces orifices et cavités jusqu'à ce que sa pièce transversale 28"' prennent appui sur une face latérale externe 99a de l'organe 94. La pièce transversale 28'" peut coopérer par glissement avec la face latérale externe 99a lors du pivotement du balai vis-à-vis du bras 14"'.

Le verrou 98 en L comprend un crochet à son extrémité libre qui est destiné à coopérer par glissement avec une face latérale 99b opposée de l'organe 94 lors du pivotement du balai vis-à-vis du bras 14"', et empêche une désolidarisation accidentelle du balai vis-à-vis du bras en fonctionnement.

L'adaptateur 26 « universel » selon l'invention peut ainsi être associé à plusieurs types de bras d'entraînement.

## Revendications

1. Adaptateur (26, 26') pour relier un balai (12) d'essuie-glace à un bras d'entraînement (14), l'adaptateur (26, 26') présentant une section en « U » formée par une base et deux flancs (42a, 42b) délimitant un logement (45), dans lequel :
- au moins un des flancs (42a) est formé par au moins deux parois (42aa, 42bb) séparées l'une de l'autre par au moins une cavité (63, 64), et
- au moins une protubérance (60) est reliée à au moins l'une des parois (42aa, 42ab, 42ba, 42bb) et s'étend au moins en partie à l'intérieur dudit logement (45),
l'adaptateur (26, 26') comprenant au moins deux protubérances (60) chacune issue d'un flanc (42a, 42b) et qui s'étendent sensiblement l'une vers l'autre dans le logement (45), l'adaptateur (26, 26') étant **caractérisé en ce qu'**au moins l'une des protubérances (60) comprend au moins un trou traversant.

2. Adaptateur selon la revendication 1, dans lequel la protubérance (60) est reliée aux deux parois (42aa, 42ab, 42ba, 42bb) délimitant la cavité (64).

3. Adaptateur selon la revendication 1 ou 2, dans lequel au moins l'une des protubérances (60) est configurée pour coopérer avec un moyen complémentaire (80) d'un connecteur pour fixer l'adaptateur (26, 26') au connecteur (24, 24') et définir au moins un moyen de pivotement autour d'un axe (Y) entre l'adaptateur (26, 26') et le connecteur.

4. Adaptateur selon l'une quelconque des revendications 1 à 3, dans lequel les deux flancs (42a, 42b) sont formés chacun par au moins deux parois (42aa, 42bb, 42ba, 42bb) séparées l'une de l'autre par au moins une cavité (63, 64).

5. Adaptateur selon l'une quelconque des revendications précédentes, dans lequel au moins un des flancs (42a, 42b) comprend une pluralité de cavités (63a, 63b, 63c, 63d, 64a, 64b, 64c, 64d) séparées les unes des autres par au moins une nervure (42c).

6. Adaptateur selon la revendication 5, comprenant une partie avant (65) séparée d'une partie arrière (66) par un axe (Y) de pivotement passant par la protubérance (60), où la partie avant (65) de l'adaptateur (26, 26') comprend plus de cavités que la partie arrière (66).

7. Adaptateur selon l'une quelconque des revendications précédentes, dans lequel au moins l'une des protubérances (60) s'étend dans une cavité (63, 64) ménagée entre les parois (42aa, 42ab, 42ba, 42bb) du flanc (42a, 42b) à partir duquel la protubérance (60) s'étend.

8. Adaptateur selon l'une quelconque des revendications précédentes, dans lequel la ou les cavités (63, 64) sont débouchantes de part et d'autre de l'adaptateur (26, 26').

9. Adaptateur selon l'une quelconque des revendications précédentes, dans lequel ladite au moins une protubérance (60) comprend une première partie (61a) en saillie d'une des parois (42aa, 42ba), dite paroi interne, dans le logement (45) et une seconde partie (61b) qui s'étend entre les parois (42aa, 42ab, 42ba, 42bb) du flanc (42a, 42b).

10. Adaptateur selon la revendication 9, dans lequel lesdites première et seconde parties (61a, 61b) ont en section des formes identiques.

11. Adaptateur selon l'une des revendications précédentes, dans lequel ladite au moins une protubérance (60) est configurée pour être engagée par encliquetage élastique dans un moyen complémentaire (80) d'un connecteur (24, 24').

12. Adaptateur selon la revendication 11, dans lequel ladite au moins une protubérance (60) comprend une partie tronquée ou chanfreinée pour faciliter son engagement par encliquetage élastique dans ledit moyen complémentaire (80) dudit connecteur (24, 24').

13. Adaptateur selon l'une quelconque des revendications précédentes, dans lequel les deux protubérances (60) définissent un même axe (Y) de pivotement de l'adaptateur sur un connecteur (24, 24').

14. Ensemble comprenant un adaptateur (26, 26') selon l'une quelconque des revendications précédentes et un connecteur (24, 24'), dans lequel le connecteur (24, 24') s'étend au moins en partie dans le logement (45) de l'adaptateur (26, 26').

15. Balai d'essuyage (12) ou bras (14) d'essuie-glace (10), **caractérisé en ce qu'**il comprend ou porte un adaptateur (26, 26') selon l'une des revendications 1 à 13 ou un ensemble selon la revendication 14.

## Patentansprüche

1. Adapter (26, 26') zum Verbinden eines Scheibenwischers (12) mit einem Antriebsarm (14), wobei der Adapter (26, 26') einen "U"-förmigen Querschnitt aufweist, der aus einer Basis und zwei Flanken (42a, 42b) gebildet ist, die eine Aufnahme (45) begrenzen, wobei:
- mindestens eine der Flanken (42a) aus mindestens zwei Wänden (42aa, 42bb) gebildet ist, die voneinander durch mindestens einen Hohlraum (63, 64) getrennt sind, und
- mindestens ein Vorsprung (60) mit mindestens einer der Wände (42aa, 42ab, 42ba, 42bb) verbunden ist und sich mindestens teilweise im Inneren der Aufnahme (45) erstreckt,
der Adapter (26, 26') mindestens zwei Vorsprünge (60) aufweist, die jeweils aus einer Flanke (42a, 42b) hervorgegangen sind und sich im Wesentlichen zueinander in der Aufnahme (45) erstrecken, wobei der Adapter (26, 26') **dadurch gekennzeichnet ist, dass** mindestens einer der Vorsprünge (60) mindestens ein Durchgangsloch aufweist.

2. Adapter nach Anspruch 1, wobei der Vorsprung (60) mit den zwei Wänden (42aa, 42ab, 42ba, 42bb) verbunden ist, die den Hohlraum (64) begrenzen.

3. Adapter nach Anspruch 1 oder 2, wobei mindestens einer der Vorsprünge (60) konfiguriert ist, um mit einem komplementären Mittel (80) eines Verbindungsstücks zusammenzuwirken, um den Adapter (26, 26') an dem Verbindungsstück (24, 24') zu befestigen und mindestens ein Schwenkmittel um eine Achse (Y) zwischen dem Adapter (26, 26') und dem Verbindungsstück zu definieren.

4. Adapter nach einem der Ansprüche 1 bis 3, wobei die zwei Flanken (42a, 42b) jeweils aus mindestens zwei Wänden (42aa, 42bb, 42ba, 42bb) gebildet sind, die voneinander durch mindestens einen Hohlraum (63, 64) getrennt sind.

5. Adapter nach einem der vorhergehenden Ansprüche, wobei mindestens eine der Flanken (42a, 42b) mehrere Hohlräume (63a, 63b, 63c, 63d, 64a, 64b, 64c, 64d) aufweist, die voneinander durch mindestens eine Rippe (42c) getrennt sind.

6. Adapter nach Anspruch 5, umfassend einen vorderen Teil (65), der von einem hinteren Teil (66) durch eine Schwenkachse (Y), die durch den Vorsprung (60) hindurchgeht, getrennt ist, wobei der hintere Teil (65) des Adapters (26, 26') mehr Hohlräume als der vordere Teil (66) aufweist.

7. Adapter nach einem der vorhergehenden Ansprüche, wobei sich mindestens einer der Vorsprünge (60) in einem Hohlraum (63, 64) erstreckt, der zwischen den Wänden (42aa, 42ab, 42ba, 42bb) der Flanke (42a, 42b) ausgebildet ist, von der aus sich der Vorsprung (60) erstreckt.

8. Adapter nach einem der vorhergehenden Ansprüche, wobei der oder die Hohlräume (63, 64) beiderseits des Adapters (26, 26') münden.

9. Adapter nach einem der vorhergehenden Ansprüche, wobei der mindestens eine Vorsprung (60) einen ersten Abschnitt (61a), der von einer der Wände (42aa, 42ba), der sogenannten Innenwand, in die Aufnahme (45) vorsteht, und einen zweiten Abschnitt (61b) aufweist, der sich zwischen den Wänden (42aa, 42ab, 42ba, 42bb) der Flanke (42a, 42b) erstreckt.

10. Adapter nach Anspruch 9, wobei der erste und der zweite Abschnitt (61a, 61b) im Querschnitt gleiche Formen aufweisen.

11. Adapter nach einem der vorhergehenden Ansprüche, wobei der mindestens eine Vorsprung (60) konfiguriert ist, um durch elastisches Einrasten in ein komplementäres Mittel (80) eines Verbindungsstücks (24, 24') in Eingriff gebracht zu werden.

12. Adapter nach Anspruch 11, wobei der mindestens eine Vorsprung (60) einen abgestumpften oder abgeschrägten Abschnitt aufweist, um sein Eingreifen durch elastisches Einrasten in das komplementäre Mittel (80) des Verbindungsstücks (24, 24') zu erleichtern.

13. Adapter nach einem der vorhergehenden Ansprüche, wobei die zwei Vorsprünge (60) eine gleiche Schwenkachse (Y) des Adapters auf einem Verbindungsstück (24, 24') definieren.

14. Anordnung, umfassend einen Adapter (26, 26') nach einem der vorhergehenden Ansprüche und ein Verbindungsstück (24, 24'), wobei sich das Verbindungsstück (24, 24') mindestens teilweise in der Aufnahme (45) des Adapters (26, 26') erstreckt.

15. Scheibenwischerblatt (12) oder Arm (14) eines Scheibenwischers (10), **dadurch gekennzeichnet, dass** er einen Adapter (26, 26') nach einem der Ansprüche 1 bis 13 oder eine Anordnung nach Anspruch 14 aufweist oder trägt.

## Claims

1. Adapter (26, 26') for connecting a windscreen wiper blade (12) to a driving arm (14), the adapter (26, 26') having a 'U'-section formed by a base and two flanks (42a, 42b) delimiting a housing (45) in which:
- at least one (42a) of the flanks is formed by at least two walls (42aa, 42bb) separated from one another by at least one cavity (63, 64), and
- at least one protuberance (60) is connected to at least one of the walls (42aa, 42ab, 42ba, 42bb) and extends at least in part inside said housing (45),
the adapter (26, 26') comprising at least two protuberances (60), each originating from a flank (42a, 42b) and extending substantially towards one another in the housing (45), the adapter (26, 26') being **characterized in that** at least one of the protuberances (60) comprises at least one through-hole.

2. Adapter according to Claim 1, wherein the protuberance (60) is connected to the two walls (42aa, 42ab, 42ba, 42bb) delimiting the cavity (64).

3. Adapter according to Claim 1 or 2, wherein at least one of the protuberances (60) is configured in order to interact with a complementary means (80) of a connector for fastening the adapter (26, 26') to the connector (24, 24') and to define at least one means of pivoting about an axis (Y) between the adapter (26, 26') and the connector.

4. Adapter according to any one of Claims 1 to 3, wherein the two flanks (42a, 42b) are each formed by at least two walls (42aa, 42bb, 42ba, 42bb) separated from one another by at least one cavity (63, 64).

5. Adapter according to any one of the preceding claims, wherein at least one of the flanks (42a, 42b) comprises a plurality of cavities (63a, 63b, 63c, 63d, 64a, 64b, 64c, 64d) separated from one another by at least one rib (42c).

6. Adapter according to Claim 5, comprising a front part (65) separated from a rear part (66) by an axis (Y) of pivoting passing via the protuberance (60), where the front part (65) of the adapter (26, 26') comprises more cavities than does the rear part (66).

7. Adapter according to any one of the preceding claims, wherein at least one of the protuberances (60) extends in a cavity (63, 64) provided between the walls (42aa, 42ab, 42ba, 42bb) of the flank (42a, 42b) from which the protuberance (60) extends.

8. Adapter according to any one of the preceding claims, wherein the cavity or cavities (63, 64) opens (open) out on either side of the adapter (26, 26').

9. Adapter according to any one of the preceding claims, wherein said at least one protuberance (60) comprises a first part (61a) projecting from one of the walls (42aa, 42ba), called the internal wall, in the housing (45) and a second part (61b) extending between the walls (42aa, 42ab, 42ba, 42bb) of the flank (42a, 42b).

10. Adapter according to Claim 9, wherein said first and second parts (61a, 61b) have identical shapes in cross section.

11. Adapter according to one of the preceding claims, wherein said at least one protuberance (60) is configured in order to be engaged by elastic snap-fitting in a complementary means (80) of a connector (24, 24').

12. Adapter according to Claim 11, wherein said at least one protuberance (60) comprises a truncated or chamfered part for facilitating its engagement by elastic snap-fitting in said complementary means (80) of said connector (24, 24').

13. Adapter according to any of the preceding claims, wherein the two protuberances (60) define one and the same axis (Y) of pivoting of the adapter on a connector (24, 24').

14. Assembly comprising an adapter (26, 26') according to any one of the preceding claims and a connector (24, 24'), wherein the connector (24, 24') extends at least in part in the housing (45) of the adapter (26, 26').

15. Wiper blade (12) or arm (14) of a windscreen wiper (10), **characterised in that** it comprises or carries an adapter (26, 26') according to one of Claims 1 to 13 or an assembly according to Claim 14.
